# EUROPEAN PATENT APPLICATION

(11) **EP 3 187 293 A1**
(43) Date of publication of application: **05.07.2017**
(21) Application number: 15203059.9
(22) Date of filing: 30.12.2015
(51) Int. Cl.: B23F 21/12, B23C 5/20, B23G 1/32

(54) **MODULAR SCREW CUTTER**

(71) Applicant: Bomar S.A. w upadlosci ukladowej, 41-400 Myslowice (PL)
(72) Inventor: LESNIAK, Tomasz, 45-265 Opole (PL); MALOLEPSZY, Stanis aw, 43-600 Jaworzno (PL); NIEMCZYK, Piotr, 43-230 Goczalkowice Zdroj (PL); WENGRZYNEK, Bogdan, 33-300 Nowy Sacz (PL)
(74) Representative: Korga, Leokadia

(57) **Abstract**

The invention relates to a modular screw cutter with interchangeable cutting inserts with an elliptical cutting edges outline.

Modular screw cutter with interchangeable cutting inserts, characterised in that the inserts have elliptical cutting edges outline obtained by the intersection of the flat surface of the rake face of the insert with the clearance face of the insert.

## Description

The invention relates to a modular screw cutter with interchangeable cutting inserts with an elliptical cutting edges outline.

It is known from the patent description PL 159354 a folding hob cutter which comprises a cylindrical body, in which there are grooves arranged parallel to the axis of the body, which embed toothed slats with the conical face surfaces, fixed from face side of the milling cutter with covers embedded detachably on the cutter's body, wherein the inner conical surfaces of the covers adhere to the conical faces of the toothed slats, characterized in that the grooves for the toothed slats have a cross-sectional shape of a prism with an asymetry angle of the surfaces of the side grooves relative to the axial plane of the milling cutter, perpendicular to the bottom surface of the groove equal to the apex angle of application of the milling cutter, and also toothed slats mounted on pins were placed in the bottom of the grooves in the mid-width of the cutter's body, they are connected to the body with screws arranged symmetrically with respect to the pins and arranged and situated in channels located in milling cutter's body from the opening side

It is known from the patent description PL 169503 a folding hob cutter which comprises a cylindrical body, in which there are grooves that have a cross-sectional shape of a prism, arranged parallel to the axis of the body, which embed toothed slats with conical outer surfaces, mounted on the face side of the milling cutter with covers embedded detachably on the miller cutter's body so that the conical inner surfaces of the covers adhere to the conical outer surfaces of the toothed slats wherein, the toothed slats are mounted on pins arranged radially in the bottoms of the grooves in the mid-width of the miller cutter's body and are secured to the body with screws arranged in the axial direction symmetrically with respect to the pins and arranged in cannals made in the miller cutter's body from the opening side for mounting the miller cutter on a lathe, characterized in that the asymetry angle of the side surfaces of the grooves relative to the axial plane of the milling cutter and passing through the edge of intersection of the planes containing the side surfaces of the grooves is equal to twice to four times the tip clearance angle of the cutter, and further bolts combining the toothed slats with the milling cutter's body are arranged on the bisectors angles

It is known from the patent description PL 171694 a folding hob cutter comprising a body in the shape of a hollow cylinder provided with channels arranged in parallel to the rotation axis of the body, in which there are embedded toothed slats with a cross-section of an acute-angled bracket, and further comprising covers mounted on the face surfaces of the body, characterized in that the channels' cross section has the form of a trapezium, whose larger base is concave and constitutes the bottom of the grooves of the channels in which there are rotatably mounted toothed slats on the pins situated in the discs of a circle with a diameter similar to the outer diameter of the body, wherein the toothed slats are set in the operating position of the milling cutter pins embedded in one of two openings arranged in pairs in the discs of a circle with a diameter similar to a four-fifths of the outer diameter of the body

Circumferential method of wheel machining of cylindrical gears using miller cutters is still the most efficient method of machining cylindrical gears cutting. Gear machining with miller cutters is carried out not only on milling point locking machines for gears, but also on universal multi-axis multi-tasking CNC lathes. Miller hob cutters manufacturers for gears in order to increase tooling capacity, increasingly produce miller hob cutters from sintered carbide. There are both uniform milling hob cutters, as well as with sintered carbide inserts. Wherein the miller hob cutters with interchangeable inserts are used for tooling gears with modules m = 5.5 - 20 mm.

Modular screw cutter for gears are among the tools with the most complex geometry. However, only a few publications deal with issues of accuracy of the outline of the teeth of milling cutters.

Initially, the modular screw cutter with interchangeable inserts had a rake surface plane parallel to the axis of the cutter. Deciding factors were technological considerations and the possibility of accurate positioning of inserts arranged in a rake plane parallel to the axis of the cutter. When the rake angle equals zero (on outside diameter), the rake surface passes through the axis of the modular cutter and the surface of the miller cutter's operation is the Archimedes screw surface (surface measured in the norm DIN 3975 symbol). Such modular cutters are characterised in that at larger angles of the helical line of the miller cutters (above 3°), the outlines of right and left sides of the modular cutter's tooth vary considerably. The most commonly used are uniform modular screw cutters. Modular cutter of the highest accuracy are technologically difficult to accomplish and expensive. For tooling of wheels with large modules, more increasingly modular cutters with interchangeable inserts from sintered carbides are used, especially with CNC machine tools. Modular cutters with interchangeable inserts with rectilinear cutting edge outline are known. From the condition of circumferential tooling, it is concluded that the operational area of the modular cutter should be involute helical surface, whose outline in a plane tangent to the cylinder is rectilinear. If the modular cutter's rake angle is zero, and the inserts are arranged tangentially to the helical rake surface of the milling cutter, then the cutting edges outlines of the inserts should to be curved. These outlines are asymmetrical at the tooth height and different for each side of the cutter tooth.

Modular screw cutter with interchangeable cutting inserts according to the invention, characterised in that the inserts have elliptical cutting edges outline obtained by the intersection of the flat surface of the rake face of the insert with the clearance face of the insert.
Favorably when the clearance surface of the insert is made as a section of the cylindrical, circular surface and the slope of the surface of the rake face of the insert determines the clearance angle of the insert.

The proposed solution is technologically possible to do and allows the increase of accuracy of the modular miller screw cutters with interchangeable cutting inserts.

## Claims

1. Modular screw cutter with interchangeable cutting inserts, **characterised in that** the inserts have elliptical cutting edges outline obtained by the intersection of the flat surface of the rake face of the insert with the clearance face of the insert.

2. Modular screw cutter according to claim 1, **characterized in that** the clearance surface of the insert is made as a section of the cylindrical, circular surface and the slope of the surface of the rake face of the insert determines the clearance angle of the insert.
